# EUROPEAN PATENT SPECIFICATION

(11) **EP 2 625 032 B1**
(45) Date of publication and mention of the grant of the patent: **14.04.2021**
(21) Application number: 11799466.5
(22) Date of filing: 06.10.2011
(51) Int. Cl.: B32B 3/12, B29C 70/74, B23B 3/08, B29D 99/00

(54) **COMPOSITE PLATE AND METHOD FOR MANUFACTURING SUCH A COMPOSITE PLATE**
VERBUNDPLATTE UND VERFAHREN ZUR HERSTELLUNG EINER SOLCHEN VERBUNDPLATTE
PLAQUE COMPOSITE ET PROCÉDÉ DE FABRICATION D'UNE TELLE PLAQUE COMPOSITE

(30) Priority: 08.10.2010 BE 201000594
(43) Date of publication of application: 14.08.2013
(73) Proprietor: Iplast Holding NV, 8790 Waregem (BE)
(72) Inventor: STOFFERIS, Frédéric, B-8790 WAREGEM (BE)
(74) Representative: Hostens, Veerle
(86) International application number: PCT/IB2011/002344
(87) International publication number: WO 2012/046127

(56) References cited:
- EP-A2- 1 048 429
- WO-A1-93/23190
- WO-A2-2007/099452
- DE-U1-202008 007 790
- US-A1- 2008 075 901

## Description

The present invention relates to a composite plate, comprising phase changing material.

Additionally, this invention relates to a method for manufacturing such composite plate.

Such phase changing material (PCM) is warmth accumulating material and comprises amongst others the chemical groups of salt hydrates and paraffin's (such as octadecane), but also eutectic and hygroscopic materials. PCM's can change phases under varying temperatures and buffer warmth or cold. PCM's based on salt hydrates are typically very corrosive. Most PCM's are salt hydrates, fatty acids and esters. Also several paraffin's, as well as ionic liquids are regularly used as PCM's.

The opportunities of PCM's were already known for a long time. In order to use them in construction sites there however arose some difficulties. When applying PCM's in existing environments and more specifically in buildings such as e.g. houses, there were much problems with the configuration and accessibility of the areas wherein the PCM's were to be inserted. With new constructions, it was possible to reserve free area for inserting PCM's. However, then there was still the difficulty that PCM's mostly are rather aggressive and need to be inserted in air and water tight packaging, which remains air and water tight over time. Up to now it was very difficult to pack such PCM's in a water- and air-tight sealing in a commercially sound way. Most production processes for packing materials do alter the PCM's at packing thereof in a non-desired and non-economical way.

Composite plates comprising a core with filling material with specific characteristics in order to obtain plates with related specific characteristics are used for a great variety of applications.

Existing composite plates with insulating characteristics are e.g. composed of a full core which is added between two layers of film or other filling material. In EP 1 048 429 A2 is e.g. described how an insulating plate is fabricated by vacuum foaming of polyurethane between two plates. A drawback of such plates is however that the choice of filling material which can be incorporated is limited. Typically insulation filling materials are incorporated in these plates. It is hard to incorporate other specific characteristics in such type of plates. These composite plates could not be filled with phase changing material, due to the fact that the cells are not permanently closed and due to the phase changing of PCM's. In DE 20 2008 007 790 U1 it is proposed to fill such composite plates with phase changing material and to close off the sides of these plates peripherally. This is however not easily done in practice.

WO 2007/099452 A2 describes how a composite plate is made by cutting off interconnected extruded channels in layers with e.g. honeycomb cavities, filling these cavities with warmth insulating or sound insulating filling material or with fire resistant filling material in order to obtain a composite plate with improved insulating capacities or with improved fire resistance. In WO 93/23190 A1, it is described how the cavities of such plate can be filled with a gas under pressure in order to make this composite plate more shock resistant.

These composite plates as described in WO 2007/099452 A2 and WO 93/23190 A1, can be filled with a greater variety of filling materials and are therefore more versatile. In DE 20 2008 007 790 U1 it is proposed to fill similar composite plates with phase changing material. However, these plates do have multiple disadvantages in practice. The production process of such plates is rather expensive, such that it is not yet commercially worth to produce such composite plates on greater scale. The filling materials that can be inserted in the cavities is also limited, as it is hardly possible to seal the cavities air-tight and/or water tight, such that the characteristics of filling materials which are used to fill the cavities could change in time and with some filling materials as e.g phase change filling materials would even alter during the production process in a non-desired way.

In DE 20 2008 007 790 U1 it is furthermore proposed to form a core sheet and a covering sheet of a composite plate in a co-extrusion process, forming cavities there between, filling these cavities with phase changing material and closing off the ends thereof. Closing off the ends of such cavities is however not easily done in practice and certainly not in an air-tight and water-tight way. The production thereof is also rather expensive, as it cannot be performed in a continuous production process.

It is therefore an object of the present invention to provide a composite plate, comprising phase changing material, wherein the phase changing material is not altered during production and which is commercially more worth producing.

This object is achieved by providing a composite plate comprising phase changing material, wherein the composite plate comprises at least one core with cavities which are filled with the phase changing material and at least one covering sheet closing off the cavities, wherein the core is made of sheet material in which the cavities are integrally formed as moulded depths by thermoforming, such that discrete boundaries surround the cavities and wherein the covering sheet is permanently bonded to the core sheet at said boundaries by melting.

The difference between such a composite plate according to the invention and a medication blister is that the covering sheet of a composite plate according to the invention is permanently bonded to the core sheet by melting and cannot manually be removed.

As the cavities are integrally formed as moulded depths, discrete boundaries surrounding the cavities are formed as well, allowing the cavities to be filled with phase changing material and the sheets to be placed on top of one another without phase changing material between them at these discrete boundaries. At sealing of the sheets at these boundaries, clean sealing welds can be obtained, such that air and water tight sealing can be assured. Leakage of the cavities is therefore reduced to a minimum.

Thanks to the composite plates according to the invention, PCM's can relatively easy be packed in a suitable composite plate which can be made air and water tight. Such plate can be made either in a flexible form, allowing easy insertion through small openings in existing places, or in a rigid form, having enough strength and rigidity to be placed standing on its own. The heat capacity per m² with a composite plate according to the invention can be much higher than with existing comparable products.

Phase changing materials can be provided as fluids, or in powder form, or as pellets or as tablets, etc. Specific filling materials of preferred embodiments of composite plates according to the invention are further on described in greater depth.

Not all cavities of a composite plate need to be filled, as long as there are cavities filled with phase changing material. Cavities can also partially be filled. It is furthermore possible to have different cavities with different filling materials etc.

The core sheet and the covering sheet of a composite plate according to the invention are preferably made by co-extrusion. Different materials can be used in order to make such sheets. Typically plastic materials will be used such as e.g. polyolefin, such as polypropylene and/or polyethylene. The core sheet and covering sheet of a composite plate according to the invention can, according to the application e.g. be perforated or can be soluble in water, etc.

In order easily to recycle composite plates according to this invention, the sheets are made of the same material. In contrast with the plates according to the described state of the art, recycling is possible as the sheets are bonded by melting. In the state of the art sheets were bonded in other ways, such as using glue.

Preferably, the covering sheet is permanently bonded to the core sheet during the co-extrusion process. The bonding is preferably realised with the remaining heat of the extrusion process of the several sheets, at placing the sheets on top of one another and cooling off the sheets.

Preferably, the cavities of a composite plate according to the invention are equally spread over the surface area of the core. Then it is possible to have the same characteristics over the whole surface as well in longitudinal direction as in transversal direction. Depending on the application it could also be desirable to have cavities in a specific pattern.

PCM's which are used as filling material in a composite plate according to this invention further preferably comprise some graphite in order to enhance the conductivity thereof.

The plate further preferably comprises air or water channels between the cavities and within the space of the core, in order to enhance interchanges between the cavities and the environment thereof.

With PCM's it is possible in this way to obtain plates with good heat transfer capacities. The small amounts of PCM which are surrounded by air or water channels, allow good heat transfer between the PCM inside the cavities and the air or water in the surrounding channels due to the enlarged contact surface of the sheet, due to its geometry. Typically for 1 m² of sheet, it is possible to obtain approximately 3 m² of contact surface.

Cavities of composite plates according to the invention could have any form. In composite plates with channels between the cavities, the cavities are however preferably substantially cylindrical, in order further to enhance interchange between the contents of the cavities and the environment.

For most applications, the cavities of a composite plate according to the invention preferably have a maximum dimension in the surface area of about 20 mm.

In order to obtain a flexible composite plate according to this invention, the cavities further preferably have a maximum height of about 10 mm. Such flexible composite plates can e.g. be stocked in a compact form by rolling them onto rolls.

A composite plate according to the invention further preferably comprises at least one additional covering sheet, which is bonded to the core sheet at the side opposed to the first said covering sheet by melting during a co-extrusion process, such that the plate can be provided with two substantially flat surfaces. Where necessary, this offers the possibility of having a good air or water flow between the two flat surfaces.

Composite plates according to this invention can further be provided with one or more top layers and/or one or more under layers. The option of laminating different kind of materials on either side enlarges the number of finishes and thus its applications. It is e.g. possible to provide the plates with a conductive layer or with a flame-retardant layer, or with an antiskid layer, or with a personalized print, or with textile, or with an additional insulating layer as for example expanded foam, etc.

One of the further advantages of a composite plate according to the invention is that in case of nailing or puncturing the plate, only one or a small number of cavities will be affected and the plate still retains its prime properties of heat absorption.

It is further an object of this invention to provide a method with which composite plates according to the invention can be produced in one single production cycle.

This object is achieved by providing a method for forming a composite plate according to any of the preceding claims, characterised in that this method comprises the following steps:
a. providing a core sheet;
b. thermoforming cavities in the core sheet, such that discrete boundaries surround the cavities;
c. filling the cavities with phase changing material;
d. providing a covering sheet;
e. sealing the cavities with the covering sheet after the cavities are filled, by melting the covering sheet to the core sheet at the discrete boundaries during a co-extrusion process.

A similar production process of such composite plates wherein the cavities are left empty is e.g. described in DE 44 47 239 A1. With such a production process, extrusion of the core sheet, moulding of the cavities, filling of the cavities, extrusion of the covering sheet and melting the covering sheet to the core sheet can realised in on single production cycle.

The core sheet and the covering sheet are each preferably provided by means of extrusion of a base sheet.

In a first specific embodiment of a method according to the invention, the phase changing material is provided in powder form or in pellet form or in tablet form.

More specifically, the phase changing material can then be filled in the cavities using a vibration technique. Alternatively, the phase changing material can then be filled in the cavities using one or more brushes.

In a further preferred such method, the phase changing material is provided in tablet form by pressing it in a tableting machine into tablets with a form complementary to the form of the respective cavities wherein they are inserted in step c. With PCM's which are tabletted in this way, it is possible to insert much more PCM per m², such that the heat capacity of a composite plate which is obtained in this way is largely increased.

In a second specific embodiment of a method according to the invention, the phase changing material is provided as a liquid. In such a method, for each cavity, a predetermined amount of liquid is preferably provided by means of a peristaltic pump and injected into the cavity.

The present invention will now be explained in more detail by means of the following detailed description of some preferred composite plates according to the present invention. The aim of this description is solely to give illustrative examples and to indicate further advantages and features of these composite plates and can therefore by no means be interpreted as a limitation of the area of application of the invention or of the patent rights defined in the claims.

In this detailed description, reference numerals are used to refer to attached drawings, in which:
- ***Fig. 1*** shows with a freehand sketch a longitudinal section of a first embodiment of a composite plate according to this invention;
- ***Fig. 2*** shows with a freehand sketch a transverse section of the composite plate from figure 1;
- ***Fig. 3*** shows with a freehand sketch a longitudinal section of a second embodiment of a composite plate according to this invention;
- ***Fig. 4*** shows with a freehand sketch a transverse section of the composite plate from figure 3;
- ***Fig. 5*** shows with a freehand sketch a longitudinal section of a third embodiment of a composite plate according to this invention;
- ***Fig. 6*** shows with a freehand sketch a transverse section of the composite plate from figure 5;
- ***Fig. 7*** shows in a schematic view a method for manufacturing a composite plate according to this invention.

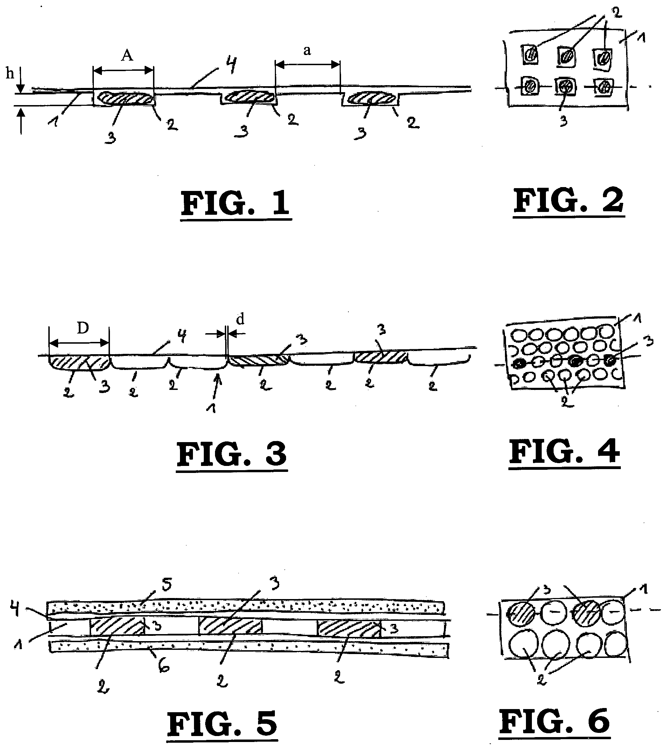

The composite plates as pictured in figures 1 to 6 each comprise a core (1) of sheet material (1) wherein cavities (2) are integrally formed as moulded depths. The cavities (2) are filled with filling material (3) and a covering sheet (4) closes off the cavities (2). The covering sheet (4) is bonded on the top side to the core sheet (1) by melting during a co-extrusion process. The sheets (1, 4) are e.g. made of polypropylene. The filling material (3) is PCM.

Possible PCM's are (this list is not limiting - between brackets, the melting temperature of the PCM is indicated):
a. available under the commercial name Thermusol ® :
   - CaCl2. 6H2O (29.4 °C)
   - Na2HPO4.12H20 (36°C)
   - Na(CH3COO).3H2O (58°C)
b. other salt hydrates:
   - LiClO3.3H2O (8°C)
   - KF.3H2O (18.5 °C)
   - LiNO3.3H2O (30°C)
   - Na2SO4.10H2O (32°C)
   - Na2S2O3.5H2O (48°C)
   - Ba(OH)2.8H2O (78°C)
   - Mg(NO3)2.6H20 (89°C)
c. inorganic mixtures:
   - 4.3% NaCl+0.4%KCl+48%CaCl2+47.3% H20 (27°C)
   - 58.7% Mg(NO3).6H2O + 41.3 %MgCl2.6H20 (58°C)
d. paraffin's
   - C14H30 (6°C)
   - C15H32 (10°C)
   - C16H34 (18°C)
   - C17H36 (19°C)
   - C18H38 (28°C)
   - C20H42 (38°C)
   - C30H62 (66°C)
   - C40H82 (82°C)
e. fatty acids:
   - caprylic acid (16°C)
   - capric acid (32 °C)
   - lauric acid (42°C)
   - myristic acid (58°C)
   - palmitic acid (61°C)
f. polyethyleenglycol (PEG)
   - PEG400 (8°C)
   - PEG600 (17°C)
   - PEG1000 (35°C)
   - PEG3000 (52°C)
   - PEG6000 (55°C)

The filling material (3) is formed in tablets with a form complementary to the form of the cavities (2). Also filling material (3) in e.g. powder form or in e.g. liquid form could be provided. The cavities (2) can have all possible forms and the dimensions thereof can be chosen depending on the application. The cavities (2) can be provided in a regular pattern or in any specific pattern according to the application.

In the composite plate in figures 1 and 2, the cavities (2) have a mainly square section, with sides with a length (A). In-between the cavities (2) channels with a width (a) are present. The cavities (2) are provided in a regular pattern in rows and columns. This has the advantage that it is easy to cut the plates to the desired dimensions by cutting them between the rows and/or columns of cavities (2). In continuous production it is also possible to provide greater headways (a) at predetermined lengths, in order to easily cut plates with predetermined dimensions at these greater headways (a). By keeping the height (h) of the cavities (2) below about 10 mm the composite plate is made flexible, such that it can be rolled on rolls.

In the composite plate in figures 3 and 4, the cavities (2) have a main cylindrical form, with diameter (D). The distance (d) between the cavities (2) is kept small. The cavities (2) are provided in a regular pattern in lines which are provided diagonally with respect to the composite plate. In such a pattern, it is possible to provide a maximum of cylindrical cavities (2) within the available space.

In the composite plate in figures 5 and 6, the cavities (2) again have a main cylindrical form, with greater diameter and a greater distance between the cavities (2). The cavities (2) are again provided in a regular pattern in rows and columns, having the same advantages as indicated with the composite plate of figures 1 and 2. Additionally, this composite plate is provided with a further covering sheet (4) which is bonded at the underside of the core sheet (1) by melting. Furthermore, a top layer (5) and an under layer (6) are bonded to the covering sheets (4).

Depending on the application several layers with core sheets (1) and covering sheets (4) can furthermore be bonded together in order to obtain thicker composite plates according to the invention.

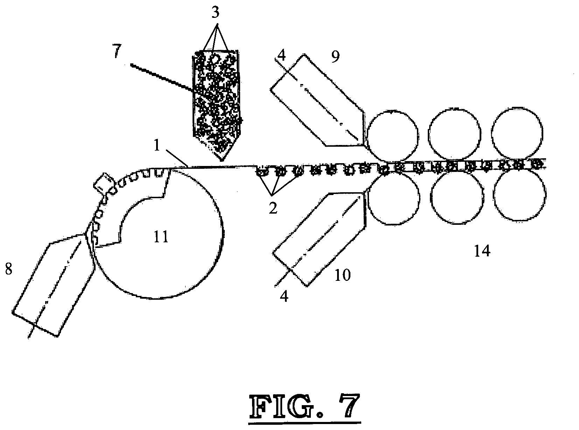

A possible method for producing a composite plate according to the invention is pictured in figure 7. The method mainly corresponds to the method as described in DE 44 47 239 A1. Sheets are extruded with extruders (8, 9, 10). The core sheet (1) is extruded with a first extruder (8). Thereafter the cavities (2) are moulded into the core sheet (1) with roll (11). In addition to the production process in DE 44 47 239 A1, here, filling material (3) is provided with a filling machine (7) and e. g. by means of trilling or using brushes, inserted in the cavities (2). Then covering sheets (4), which are extruded by additional extruders (9, 10) are provided on top and below the core sheet (1). All sheets (1, 4) are melted together and torn and cooled down (14). Alternatives to the production process for providing more or less sheets (1, 4) are described in DE 44 47 239 A1.

## Claims

1. Composite plate comprising at least one core (1) with cavities (2) which are filled with phase changing material (3) and at least one covering sheet (4), **characterised in that** the core (1) is made of sheet material (1) in which the cavities (2) are integrally formed as moulded depths, such that discrete boundaries surround the cavities and that the covering sheet (4) is permanently melted to the core sheet (1) at said boundaries, closing off the cavities (2).

2. Composite plate according to claim 1, **characterised in that** the core sheet (1) and the covering sheet (4) are made by co-extrusion.

3. Composite plate according to claims 1 and 2, **characterised in that** the covering sheet (4) is permanently bonded to the core sheet (1) during the co-extrusion process.

4. Composite plate according to any of the previous claims, **characterised in that** the plate comprises air or water channels between the cavities (2) and within the space of the core (1).

5. Composite plate according to any of the preceding claims, **characterized in that** the cavities (2) have a maximum dimension (D, A) in the surface area of about 20 mm.

6. Composite plate according to any of the preceding claims, **characterized in that** the cavities (2) have a maximum height (h) of about 10 mm.

7. Composite plate according to any of the preceding claims, **characterized in that** it comprises at least one additional covering sheet, which is bonded to the core sheet (1) at the side opposed to the first said covering sheet (4) by melting during a co-extrusion process.

8. Method for forming a composite plate comprising the steps:
a. providing a core sheet (1);
b. forming cavities (2) in the core sheet (1)
c. providing a covering sheet (4);
d. melting the covering sheet (4) to the core sheet (1) during a co-extrusion process;
e. filling the cavities (2) with phase changing material (3);
**characterised in that** the cavities (2) are thermoformed in the core sheet (1), such that discrete boundaries surround the cavities (2) and the covering sheet (4) is melted to the core sheet (1) at the discrete boundaries after the cavities (2) are filled with the phase changing material (3), sealing the cavities (2), in order to form a composite plate according to any of the preceding claims.

9. Method according to claim 8, **characterised in that** the core sheet (1) and the covering sheet (4) are each provided by means of extrusion of a base sheet.

10. Method according to claim 8 or 9, **characterised in that** the phase changing material (3) is provided in powder form or in pellet form or in tablet form.

11. Method according to claim 10, **characterised in that** the phase changing material (3) is filled in the cavities (2) using a vibration technique.

12. Method according to claim 10, **characterised in that** the phase changing material (3) is filled in the cavities (2) using one or more brushes.

13. Method according to any of claims 10 to 12, **characterised in that** the phase changing material (3) is provided in tablet form by pressing it in a tableting machine into tablets with a form complementary to the form of the respective cavities (2) wherein they are inserted in step c.

14. Method according to claim 8 or 9, **characterised in that** the phase changing material (3) is provided as a liquid.

15. Method according to claim 14, **characterised in that** for each cavity (2), a predetermined amount of liquid is provided by means of a peristaltic pump and injected into the cavity (2).

## Patentansprüche

1. Verbundstoffplatte, umfassend wenigstens einen Kern (1) mit Hohlräumen (2), die mit einem Phasenwechselmaterial (3) gefüllt sind, und wenigstens eine Deckbahn (4), **dadurch gekennzeichnet, dass** der Kern (1) aus Bahnmaterial (1) gebildet ist, in das die Hohlräume (2) integral als geformte Vertiefungen gebildet sind, so dass die Hohlräume von diskreten Grenzen umgeben sind, und dass die Deckbahn (4) an den Grenzen dauerhaft an die Deckbahn (1) geschmolzen ist, um die Hohlräume (2) abzuschließen.

2. Verbundstoffplatte gemäß Anspruch 1, **dadurch gekennzeichnet, dass** die Kernbahn (1) und die Deckbahn (4) durch Coextrusion hergestellt sind.

3. Verbundstoffplatte gemäß Ansprüchen 1 und 2, **dadurch gekennzeichnet, dass** die Deckbahn (4) bei dem Coextrusionsverfahren dauerhaft an die Kernbahn (1) gebunden wird.

4. Verbundstoffplatte gemäß einem der vorstehenden Ansprüche, **dadurch gekennzeichnet, dass** die Platte Luft- oder Wasserkanäle zwischen den Hohlräumen (2) und innerhalb des Raums des Kerns (1) aufweist.

5. Verbundstoffplatte gemäß einem der vorstehenden Ansprüche, **dadurch gekennzeichnet, dass** die Hohlräume (2) eine größte Abmessung (D, A) in der Oberfläche von etwa 20 mm aufweisen.

6. Verbundstoffplatte gemäß einem der vorstehenden Ansprüche, **dadurch gekennzeichnet, dass** die Hohlräume (2) eine größte Höhe (h) von etwa 10 mm aufweisen.

7. Verbundstoffplatte gemäß einem der vorstehenden Ansprüche, **dadurch gekennzeichnet, dass** sie wenigstens eine zusätzliche Deckbahn umfasst, die an der Seite, die der ersten Deckbahn (4) gegenüber liegt, durch Schmelzen während eines Coextrusionsverfahren an die Kernbahn (1) gebunden ist.

8. Verfahren zur Herstellung einer Verbundstoffplatte, umfassend die Schritte:
a. Bereitstellen einer Kernbahn (1);
b. Bilden von Hohlräumen (2) in der Kernbahn (1);
c. Bereitstellen einer Deckbahn (4);
d. Schmelzen der Deckbahn (4) an die Kernbahn (1) während eines Coextrusionsverfahrens;
e. Füllen der Hohlräume (2) mit Phasenwechselmaterial (3);
**dadurch gekennzeichnet, dass** die Hohlräume (2) in der Kernbahn (1) wärmegeformt werden, so dass die Hohlräume (2) von diskreten Grenzen umgeben werden, und dass die Deckbahn (4) an den diskreten Grenzen dauerhaft an die Deckbahn (1) geschmolzen wird, nachdem die Hohlräume (2) mit dem Phasenwechselmaterial (3) gefüllt sind, um die Hohlräume (2) abzuschließen, um eine Verbundstoffplatte gemäß einem der vorstehenden Ansprüche zu bilden.

9. Verfahren gemäß Anspruch 8, **dadurch gekennzeichnet, dass** die Kernbahn (1) und die Deckbahn (4) beide durch Extrusion einer Grundbahn bereitgestellt werden.

10. Verfahren gemäß Anspruch 8 oder 9, **dadurch gekennzeichnet, dass** das Phasenwechselmaterial (3) in Pulverform oder in Pelletform oder in Tablettenform bereitgestellt wird.

11. Verfahren gemäß Anspruch 10, **dadurch gekennzeichnet, dass** das Phasenwechselmaterial (3) unter Verwendung eines Vibrationsverfahrens in die Hohlräume (2) gefüllt wird.

12. Verfahren gemäß Anspruch 10, **dadurch gekennzeichnet, dass** das Phasenwechselmaterial (3) unter Verwendung einer oder mehrerer Bürsten in die Hohlräume (2) gefüllt wird.

13. Verfahren gemäß einem der Ansprüche 10 bis 12, **dadurch gekennzeichnet, dass** das Phasenwechselmaterial (3) in Tablettenform bereitgestellt wird, indem es in einer Tablettiermaschine zu Tabletten mit einer Form gepresst wird, die zu der Form der entsprechenden Hohlräume (2), in die sie bei Schritt c eingeführt werden, komplementär sind.

14. Verfahren gemäß Anspruch 8 oder 9, **dadurch gekennzeichnet, dass** das Phasenwechselmaterial (3) als Flüssigkeit bereitgestellt wird.

15. Verfahren gemäß Anspruch 14, **dadurch gekennzeichnet, dass** für jeden Hohlraum (2) eine vorbestimmte Menge an Flüssigkeit mithilfe einer Peristaltikpumpe bereitgestellt und in den Hohlraum (2) eingespritzt wird.

## Revendications

1. Plaque composite comprenant au moins une âme (1) avec des cavités (2) qui sont remplies d'un matériau à changement de phase (3) et au moins une feuille de couverture (4), **caractérisée en ce que** l'âme (1) est constituée d'un matériau en feuille (1) dans lequel les cavités (2) sont formées d'un seul tenant sous forme de profondeurs moulées, de sorte que des limites discrètes entourent les cavités et que la feuille de couverture (4) est fondue de manière permanente à la feuille d'âme (1) au niveau desdites limites, fermant les cavités (2).

2. Plaque composite selon la revendication 1, **caractérisée en ce que** la feuille d'âme (1) et la feuille de couverture (4) sont fabriquées par co-extrusion.

3. Plaque composite selon les revendications 1 et 2, **caractérisée en ce que** la feuille de couverture (4) est collée de manière permanente à la feuille d'âme (1) pendant le processus de coextrusion.

4. Plaque composite selon l'une quelconque des revendications précédentes, **caractérisée en ce que** la plaque comprend des canaux d'air ou d'eau entre les cavités (2) et dans l'espace de l'âme (1).

5. Plaque composite selon l'une quelconque des revendications précédentes, **caractérisée en ce que** les cavités (2) ont une dimension maximale (D, A) dans la surface d'environ 20 mm.

6. Plaque composite selon l'une quelconque des revendications précédentes, **caractérisée en ce que** les cavités (2) ont une hauteur maximale (h) d'environ 10 mm.

7. Plaque composite selon l'une quelconque des revendications précédentes, **caractérisée en ce qu'**elle comprend au moins une feuille de couverture supplémentaire, qui est collée à la feuille d'âme (1) sur le côté opposé à ladite première feuille de couverture (4) par fusion au cours d'un processus de coextrusion.

8. Procédé de formation d'une plaque composite comprenant les étapes suivantes :
a. fourniture d'une feuille d'âme (1) ;
b. formation de cavités (2) dans la feuille d'âme (1)
c. fourniture d'une feuille de couverture (4) ;
d. fusion de la feuille de couverture (4) sur la feuille d'âme (1) au cours d'un processus de coextrusion ;
e. remplissage des cavités (2) avec un matériau à changement de phase (3) ;
**caractérisé en ce que** les cavités (2) sont thermoformées dans la feuille d'âme (1), de telle sorte que des limites discrètes entourent les cavités (2) et la feuille de couverture (4) est fondue sur la feuille d'âme (1) aux limites discrètes après que les cavités (2) sont remplies avec le matériau à changement de phase (3), scellant les cavités (2), afin de former une plaque composite selon l'une quelconque des revendications précédentes.

9. Procédé selon la revendication 8, **caractérisé en ce que** la feuille d'âme (1) et la feuille de couverture (4) sont chacune fournies au moyen de l'extrusion d'une feuille de base.

10. Procédé selon la revendication 8 ou 9, **caractérisé en ce que** le matériau à changement de phase (3) est fourni sous forme de poudre ou sous forme de pastilles ou sous forme de comprimés.

11. Procédé selon la revendication 10, **caractérisé en ce que** le matériau à changement de phase (3) est rempli dans les cavités (2) en utilisant une technique de vibration.

12. Procédé selon la revendication 10, **caractérisé en ce que** le matériau à changement de phase (3) est rempli dans les cavités (2) en utilisant une ou plusieurs brosses.

13. Procédé selon l'une quelconque des revendications 10 à 12, **caractérisé en ce que** le matériau à changement de phase (3) est fourni sous forme de comprimés par pression dans une machine à comprimés en des comprimés ayant une forme complémentaire de la forme des cavités respectives (2) dans lesquelles ils sont insérés à l'étape c.

14. Procédé selon la revendication 8 ou 9, **caractérisé en ce que** le matériau à changement de phase (3) est fourni sous forme liquide.

15. Procédé selon la revendication 14, **caractérisé en ce que** pour chaque cavité (2), une quantité prédéterminée de liquide est fournie au moyen d'une pompe péristaltique et injectée dans la cavité (2).
